(19) **Europäisches Patentamt / European Patent Office / Office européen des brevets**

(11) **EP 3 226 053 B1**

(12) # EUROPEAN PATENT SPECIFICATION

(45) Date of publication and mention
of the grant of the patent:
**28.08.2024 Bulletin 2024/35**

(21) Application number: **17163291.2**

(22) Date of filing: **28.03.2017**

(51) International Patent Classification (IPC):
**G02B 9/60** *(2006.01)*     **G02B 13/00** *(2006.01)*
**G02B 13/06** *(2006.01)*

(52) Cooperative Patent Classification (CPC):
**G02B 13/06; G02B 9/60; G02B 13/0045;
G02B 13/006**

(54) **WIDE ANGLE LENS**

**WEITWINKELLINSE**

**LENTILLE GRAND ANGLE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2016 JP 2016070437**

(43) Date of publication of application:
**04.10.2017 Bulletin 2017/40**

(73) Proprietor: **Nidec Sankyo Corporation
Suwa-gun, Nagano 393-8511 (JP)**

(72) Inventor: **KOMIYAMA, Tadashi
Nagano, 393-8511 (JP)**

(74) Representative: **Becker Kurig & Partner
Patentanwälte mbB
Bavariastraße 7
80336 München (DE)**

(56) References cited:
**WO-A1-2015/020006     US-A1- 2010 188 757
US-A1- 2014 347 494     US-A1- 2016 187 617**

**Description**

FIELD OF THE INVENTION

The present invention relates to a wide angle lens constituted of five lenses in four groups.

BACKGROUND

A wide angle lens as an image pickup lens has been proposed which is constituted of five lenses in four groups which includes, from an object side toward an image side, a first lens, a second lens, a third lens, a diaphragm, a fourth lens and a fifth lens in this order, and the fourth lens and the fifth lens constitute a cemented lens (see Japanese Patent Laid-Open No. 2015-45803). In the fourth lens and the fifth lens of the wide angle lens described in the Patent Literature, a lens surface on the image side of the fourth lens which is a concave curved face and a lens surface on the object side of the fifth lens which is a convex curved face are cemented each other to constitute a cemented lens which is capable of reducing a magnification chromatic aberration and the like.

In the wide angle lens described in the Patent Literature, an effective focal length of the entire lens system is 1mm, and the center radius of curvature of the cemented surface (ninth face) of the cemented lens is 0.4327mm. Therefore, a curvature of the lens surface on the image side of the fourth lens which is a concave curved face and a curvature of the lens surface on the object side of the fifth lens which is a convex curved face are large and thus it is difficult to stably perform a manufacturing process and a cementing process of a lens single body and a load in the processes is large.

WO 2015/020006 A1 discloses a wide-angle lens having a lens shape whereby a first lens comprising a meniscus lens is readily produced. In the wide-angle lens, the first lens has a negative power having a concave surface facing the image side. A second lens is a negative plastic lens having a non-spherical surface, the concave surface thereof facing the image side. A third lens is a negative plastic lens having a non-spherical surface, the concave surface thereof facing the object side. A fourth lens has a positive power having a convex surface facing the image side. A fifth lens and a sixth lens are both plastic lenses having non-spherical surfaces, and configure a cemented lens having positive power.

US 2014/347494 A1 discloses an imaging lens which is provided with: a first lens with negative power; a second lens with negative power; a third lens with positive power; and a fourth lens with positive power. The cemented fourth lens is formed from an object side lens with negative power and an image side lens with positive power. The thickness of a resin adhesive layer that bonds the object side lens and the image side lens is 20 $\mu$m or greater on the optical axis, and when Sg1H is the amount of sag in the image side lens surface of the object side lens and Sg2H is the amount of sag in the object side lens surface of the image side lens. The bonding operation is easy without damage occurring to the cemented surfaces, with a design that takes into account thickness of the resin adhesive layer; therefore various forms of aberration can be corrected.

SUMMARY

In view of the problem described above, an objective of the present invention is to provide a wide angle lens which is capable of reducing an aberration without increasing a load in the process.

To achieve the above mentioned objective, the present invention is provided by appended claim 1. Beneficial embodiments are provided in the dependent claims. The following disclosure serves a better understanding of the invention and provides a wide angle lens consisted of a first lens, a second lens, a third lens, a diaphragm, a fourth lens and a fifth lens which are arranged in order from an object side to an image side. The first lens is a negative meniscus lens with a convex surface facing the object side, the second lens is a negative lens with a concave surface facing the image side and at least one of a lens surface on the object side and a lens surface on the image side is an aspherical surface, and the third lens is a positive meniscus lens with a convex surface facing the image side or a biconvex lens and at least one of a lens surface on the object side and a lens surface on the image side is an aspherical surface. The fourth lens is a negative meniscus lens with a concave surface facing the image side or a biconcave lens, the fifth lens is a biconvex lens, and the fourth lens and the fifth lens are plastic lenses which constitute a cemented lens in which a lens surface on the image side of the fourth lens and a lens surface on the object side of the fifth lens are cemented. In addition, when a refractive index of the fourth lens is "n4", the following condition (1) is satisfied:

$$(1)\ \text{n4}\ \geq 1.632$$

and, when a center radius of curvature of a cemented surface of the cemented lens is "R45" and an effective focal length of an entire lens system is "f0", the following condition (2) is satisfied:

$$(2)\ 0.5 < |\ R45/f0\ | < 0.8.$$

In the wide angle lens in accordance with the present invention, the refractive index "n4" of the fourth lens satisfies the condition (1) and thus the entire optical length can be shortened and the wide angle lens can be constituted so that the radius of curvature "R45" of the cemented surface of the cemented lens and the effective focal length "f0" of the entire optical system satisfy the condition (2). Therefore, the magnification chromatic aberration can be reduced. Further, a lower limit is set in the radius of curvature "R45" of the cemented surface of the cemented lens and thus the center radius of curvature of a lens surface on the image side of the fourth lens which is a concave curved face and the center radius of curvature of a lens surface on the object side of the fifth lens which is a convex curved face are large. Therefore, a manufacturing process and a cementing process of a lens single body can be stably performed and thus a load in the process is small.

In the present invention, when the Abbe number of the fourth lens is "v4", the following condition (3) is satisfied:

$$(3)\ v4\ \le 24\ .$$

According to this constitution, the fourth lens easily utilizes material whose refractive index "n4" is high and thus the magnification chromatic aberration and the like can be reduced.

In the present invention, it may be adopted that, when a composite focal length of the fourth lens and the fifth lens is "f45", the following condition (4) is satisfied:

$$(4)\ f45/f0 < 3.$$

According to this constitution, the chromatic aberration and the like can be reduced.

In the present invention, it may be adopted that, when a focal length of the fourth lens is "f4", the following condition (5) is satisfied:

$$(5)\ -2 < f4/f0 < 0.$$

In the present invention, it may be adopted that, when a composite focal length of the first lens and the second lens is "f12" and a composite focal length of the third lens, the fourth lens and the fifth lens is "f345", the following condition (6) is satisfied:

$$(6)\ -1 < f12/f345 < 0.$$

According to this constitution, the aberrations can be reduced. Further, the "f12 / f345" is minus and thus it is advantageous in a temperature characteristic.

In the present invention, it may be adopted that a horizontal viewing angle of the wide angle lens is 120 degrees or more.

Other features and advantages of the invention will be apparent from the following detailed description, taken in conjunction with the accompanying drawings that illustrate, by way of example, various features of embodiments of the invention.

BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:

FIG. 1 is an explanatory view showing a wide angle lens not in accordance with the present invention.

FIG. 2 is an explanatory view showing respective lens data, aspherical coefficients and the like of a wide angle lens shown in FIG. 1.

FIGs. 3A, 3B and 3C are explanatory views showing astigmatism and the like of a wide angle lens shown in FIG. 1.

FIGs. 4A through 4E are explanatory views showing transverse aberrations of a wide angle lens shown in FIG. 1.

FIG. 5 is an explanatory view showing a wide angle lens in accordance with a second embodiment of the present invention.

FIG. 6 is an explanatory view showing respective lens data, aspherical coefficients and the like of a wide angle lens shown in FIG. 5.

FIGs. 7A, 7B and 7C are explanatory views showing astigmatism and the like of a wide angle lens shown in FIG. 5.

FIGs. 8A through 8F are explanatory views showing transverse aberrations of a wide angle lens shown in FIG. 5.

FIG. 9 is an explanatory view showing a wide angle lens in accordance with a third embodiment of the present invention.

FIG. 10 is an explanatory view showing respective lens data, aspherical coefficients and the like of a wide angle lens shown in FIG. 9.

FIGs. 11A, 11B and 11C are explanatory views showing astigmatism and the like of a wide angle lens shown in FIG. 9.

FIGs. 12A through 12F are explanatory views showing transverse aberrations of a wide angle lens shown in FIG. 9.

FIG. 13 is an explanatory view showing a wide angle lens in accordance with a fourth embodiment of the present invention.

FIG. 14 is an explanatory view showing respective lens data, aspherical coefficients and the like of a wide angle lens shown in FIG. 13.

FIGs. 15A, 15B and 15C are explanatory views showing astigmatism and the like of a wide angle lens shown in FIG. 13.

FIGs. 16A through 16E are explanatory views showing transverse aberrations of a wide angle lens shown in FIG. 13.

FIG. 17 is an explanatory view showing a wide angle lens in accordance with a fifth embodiment of the present invention.

FIG. 18 is an explanatory view showing respective lens data, aspherical coefficients and the like of a wide angle lens shown in FIG. 17.

FIGs. 19A, 19B and 19C are explanatory views showing astigmatism and the like of a wide angle lens shown in FIG. 17.

FIGs. 20A through 20F are explanatory views showing transverse aberrations of a wide angle lens shown in FIG. 17.

DETAILED DESCRIPTION

Wide-angle lenses to which the present invention is applied will be described below with reference to the accompanying drawings. In the following description, the unit is "mm" unless there is a specific indication.

[First Embodiment]

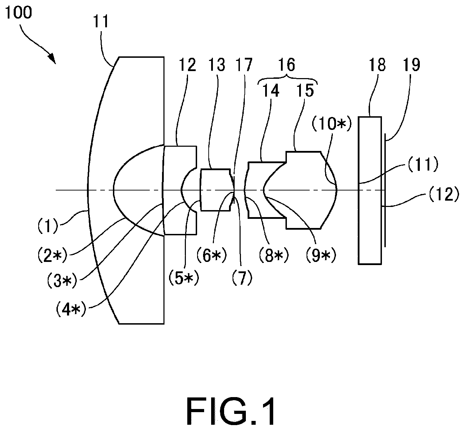

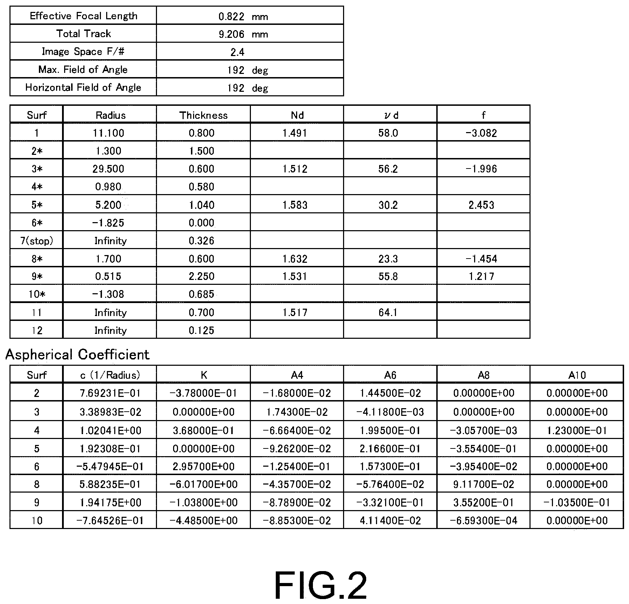

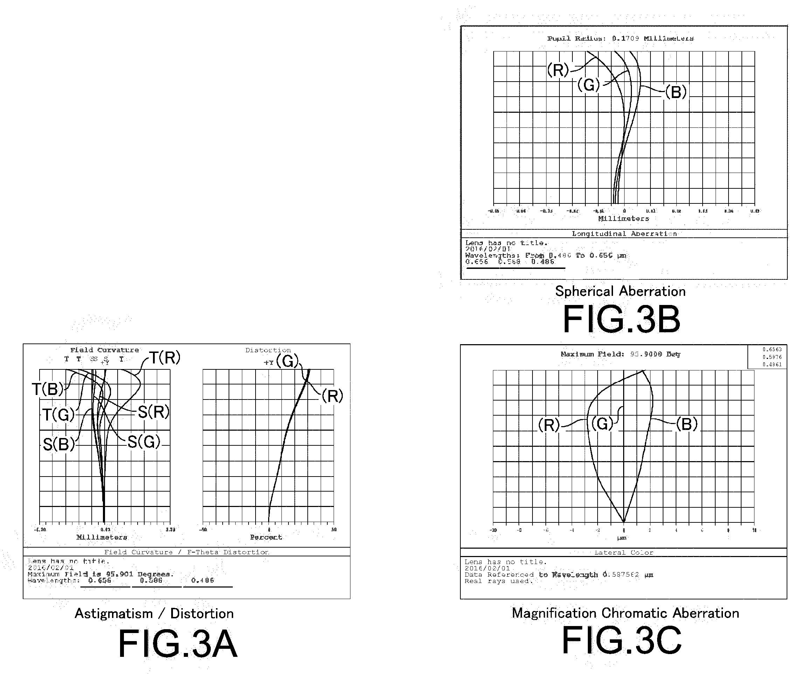

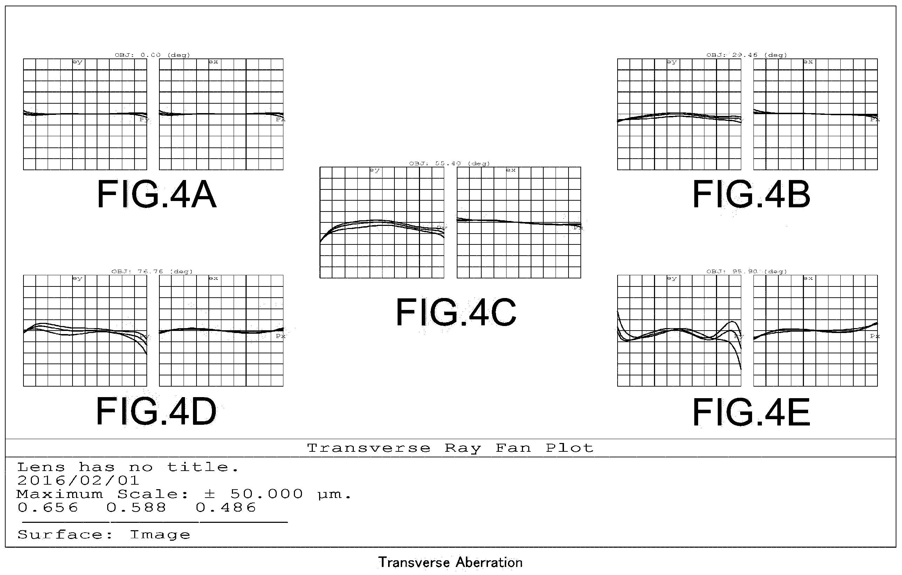

FIG. 1 is an explanatory view showing a wide angle lens 100 in accordance with a first embodiment not falling under the scope of the claimed invention. In FIG. 1, surface numbers corresponding to lens data and aspherical coefficients are indicated by using a parenthesis. Further, the surface added with the mark "*" after the surface number is an aspherical surface. FIG. 2 is an explanatory view showing respective lens data, aspherical coefficients and the like of the wide angle lens 100 shown in FIG. 1. FIGs. 3A, 3B and 3C are explanatory views showing astigmatism and the like of the wide angle lens 100 shown in FIG. 1. FIG. 3A is an explanatory view showing astigmatism / distortion (distortion aberration), FIG. 3B is an explanatory view showing a spherical aberration and FIG. 3C is an explanatory view showing a magnification chromatic aberration. In FIG. 3A, "S" shows characteristic in a sagittal direction and "T" shows characteristic in a tangential direction. The distortion indicates a variation ratio of an image between an imaging center part and a peripheral part and, the smaller the absolute value of a numerical value indicating the distortion is, the higher the precision of the lens is. FIGs. 4A through 4E are explanatory views showing transverse aberrations of the wide angle lens 100 shown in FIG. 1. FIGs. 4A through 4E show transverse aberrations in the "X"-axis direction and the "Y"-axis direction at 0deg, 29.46deg, 55.40deg, 76.76deg and 95.90deg. In FIGs. 3A through 3C, "(R)" shows an aberration of a light of the wavelength 645nm, "(G)" shows an aberration of a light of the wavelength 588nm, and "(B)" shows an aberration of a light of the wavelength 486nm. The aspherical coefficients A4, A6, A8 and A10 shown in FIG. 2 correspond to respective coefficients in the following aspherical surface function. In this expression, "Z" is a sag amount, "c" is an inverse number of a radius of curvature, "K" is a conical coefficient, and "r" is a light height.

[Expression 1]

$$Z = \frac{cr^2}{1 + \sqrt{1 - (1 + K)c^2 r^2}} + \sum_{n=2}^{5} A_{2n} r^{2n}$$

A horizontal viewing angle of the wide-angle lens 100 shown in FIG. 1 is 120° or more. In the wide angle lens 100, a first lens 11, a second lens 12, a third lens 13, a diaphragm 17, a fourth lens 14 and a fifth lens 15 are disposed in this order from an object side to an image side. A filter 18 and an imaging element 19 are disposed in this order on the image side with respect to the fifth lens 15. The first lens 11 is a negative meniscus lens with a convex surface facing the object side. In this embodiment, a surface on the object side (first surface 1) of the first lens 11 which is a convex surface is a spherical surface, and a surface on the image side (second surface 2) which is a concave surface is an aspherical surface.

The second lens 12 is a negative lens with a concave surface facing the image side. In this embodiment, the second lens 12 is a negative meniscus lens with a concave surface facing the image side, and at least one of a lens surface on the object side (third surface 3) which is a convex surface and a lens surface on the image side (fourth surface 4) which is a concave surface is an aspherical surface. In this embodiment, both of the lens surface on the object side (third surface 3) of the second lens 12 and the lens surface on the image side (fourth surface 4) are aspherical surfaces.

The third lens 13 is a positive meniscus lens with a convex surface facing the image side or a biconvex lens, and at least one of a lens surface on the object side (fifth surface 5) and a lens surface on the image side (sixth surface 6) is an aspherical surface. In this embodiment, the third lens 13 is a biconvex lens, and both of the lens surface on the object side (fifth surface 5) which is a convex surface and the lens surface on the image side (sixth surface 6) which is a convex surface are aspherical surfaces.

The fourth lens 14 is a negative meniscus lens with a concave surface facing the image side or a biconcave lens. In this embodiment, the fourth lens 14 is a negative meniscus lens with a concave surface facing the image side, and both of a surface on the object side (eighth surface 8) of the fourth lens 14 which is a convex surface and a surface on the image side (ninth surface 9) which is a concave surface are aspherical surfaces.

The fifth lens 15 is a biconvex lens. The fourth lens 14 and the fifth lens 15 are plastic lenses and constitute a cemented lens 16 in which the lens surface on the image side of the fourth lens 14 and the lens surface on the object side of the fifth lens 15 are cemented each other. Both of a cemented surface (ninth surface 9) of the cemented lens 16 and a surface on the image side (tenth surface 10) of the fifth lens 15 which is a convex surface are aspherical surfaces. In this embodiment, the first lens 11, the second lens 12 and the third lens 13 are also plastic lenses similarly to the fourth lens 14 and the fifth lens 15.

Main parameters of the wide angle lens 100 constituted as described above are shown in Table 1. The parameters shown in Table 1 are as follows. In Table 1, the parameters in a second through a fifth embodiments described below are also shown.

f0    effective focal length of the entire lens system
f4    focal length of the fourth lens 14
f12    composite focal length of the first lens 11 and the second lens 12
f345    composite focal length of the third lens 13, the fourth lens 14 and the fifth lens 15
f45    composite focal length of the fourth lens 14 and the fifth lens 15
R45    center radius of curvature of a cemented surface of the cemented lens 16
n4    refractive index of the fourth lens 14
v4    Abbe number of the fourth lens 14

[Table 1]

| Embodiment | f0 | f4 | f 12 | f 345 | f 45 | R45 | n4 | $v$ 4 | f 4/f0 | f45/f0 | f 12/f 345 | \|R45/f0\| |
|---|---|---|---|---|---|---|---|---|---|---|---|---|
| 1 | 0.822 | -1.454 | -0.889 | 2.182 | 2.314 | 0.515 | 1.632 | 23.3 | -1.769 | 2.816 | -0.408 | 0.627 |
| 2 | 1.410 | -2.787 | -1.662 | 2.648 | 3.057 | 0.750 | 1.632 | 23.3 | -1.976 | 2.168 | -0.628 | 0.532 |
| 3 | 1.410 | -2.249 | -1.807 | 2.671 | 3.205 | 0.764 | 1.632 | 23.3 | -1.595 | 2.272 | -0.676 | 0.542 |
| 4 | 1.056 | -1.528 | -1.711 | 2.088 | 3.055 | 0.615 | 1.637 | 24.0 | -1.447 | 2.894 | -0.819 | 0.582 |
| 5 | 0.669 | -1.062 | -1.428 | 2.372 | 1.884 | 0.472 | 1.637 | 24.0 | -1.587 | 2.815 | -0.602 | 0.705 |
| Conditional Expression | | | | | | | | | -2 ~ 0 | <3 | -1 ~ 0 | 0.5 ~ 0.8 |
| Condition | | | | | | | (1) | (3) | (5) | (4) | (6) | (2) |

As shown in FIG. 2, in the wide angle lens 100, the effective focal length "f0" (Effective Focal Length) of the entire optical system is 0.822mm, the object-image distance (Total Track / entire optical length) is 9.206mm, the "F"-value of the entire lens system (Image Space F/#) is 2.4, the maximum viewing angle (Max. Field Angle) is 192deg, and the horizontal viewing angle (Horizontal Field Angle) is 192deg.

Further, as shown in FIG. 2 and Table 1, the wide angle lens 100 satisfy all of the following conditional expressions (1), (2), (3), (4), (5) and (6). First, the refractive index "n4" of the fourth lens 14 is 1.632, which satisfies the following conditional expression (1).

$$n4 \geq 1.632 \quad \text{conditional expression (1)}$$

A center radius of curvature "R45" of the cemented surface (ninth surface 9) of the cemented lens 16 is 0.515mm, and the effective focal length "f0" of the entire lens system is 0.822mm. Therefore, the following conditional expression (2) is satisfied.

$$0.5 < |\,R45/f0\,| = 0.627 < 0.8 \quad \text{conditional expression (2)}$$

The Abbe number "v4" of the fourth lens 14 is 23.3 and satisfies the following conditional expression (3).

$$v4 \leq 24 \quad \text{conditional expression (3)}$$

The fourth lens 14 may be, for example, made of optical polyester resin (OKP4HT) made by Osaka Gas chemical KK.

The composite focal length "f45" of the fourth lens 14 and the fifth lens 15 is 2.314mm, and the effective focal length "f0" of the entire lens system is 0.822mm. Therefore, the following conditional expression (4) is satisfied.

$$f45/f0 = 2.816 < 3 \quad \text{conditional expression (4)}$$

The focal length "f4" of the fourth lens 14 is -1.454mm, and the effective focal length "f0" of the entire lens system is 0.822mm. Therefore, the focal length "f4" satisfies the following conditional expression (5).

$$-2 < f4/f0 = -1.769 < 0 \quad \text{conditional expression (5)}$$

The composite focal length "f12" of the first lens 11 and the second lens 12 is -0.889mm, and the composite focal length "f345" of the third lens 13, the fourth lens 14 and the fifth lens 15 is 2.182mm. Therefore, the composite focal length "f12" and the composite focal length "f345" satisfy the following conditional expression (6).

$$-1 < f12/f345 = -0.408 < 0 \quad \text{conditional expression (6)}$$

The astigmatism / distortion (distortion aberration), the spherical aberration and the magnification chromatic aberration of the wide angle lens 100 constituted as described above are shown in FIGs. 3A through 3C, and the transverse aberrations are shown in FIGs. 4A through 4E. All the aberrations are small.

(Principal Effects in this Embodiment)

As described above, the wide angle lens 100 in this embodiment is constituted of five lenses in four groups and each of the five lenses is made of a plastic lens. Therefore, even when a horizontal viewing angle of the wide angle lens 100 is 120° or more, the wide angle lens 100 can be made small-sized and lightweight at a low cost. Further, eight surfaces of totaled nine surfaces are aspherical surfaces and thus, as shown in FIGs. 3A through 3C, the aberrations can be reduced with a small number of lenses.

In the wide angle lens 100 in this embodiment, the refractive index "n4" of the fourth lens 14 satisfies the conditional expression (1) and the refractive index "n4" is larger than 1.6. Therefore, the entire optical length of the wide angle lens 100 can be shortened and the radius of curvature "R45" of the cemented surface (ninth surface 9) of the cemented lens 16 and the effective focal length "f0" of the entire optical system can be easily constituted so as to satisfy the conditional expression (2). Accordingly, the magnification chromatic aberration can be reduced. Further, a lower limit is set in the radius of curvature "R45" of the cemented surface (ninth surface 9) of the cemented lens 16 and thus the center radius of curvature of the lens surface on the image side of the fourth lens 14 which is a concave curved face is large and the center radius of curvature of the lens surface on the object side of the fifth lens 15 which is a convex curved face is large. Therefore, a manufacturing process and a cementing process of a lens single body can be stably performed and thus a load in the process is small. In addition, the Abbe number "v4" of the fourth lens 14 satisfies the conditional expression (3) and the Abbe number "v4" is smaller than 27. Therefore, the fourth lens 14 easily utilizes material whose refractive index "n4" is high and thus the magnification chromatic aberration and the like can be reduced.

The composite focal length "f45" of the fourth lens 14 and the fifth lens 15 is short and satisfies the conditional expression (4). Therefore, the chromatic aberration and the like can be reduced. Further, the focal length "f4" of the fourth lens 14 is short and satisfies the conditional expression (5). Therefore, it is advantageous to reduce the chromatic aberration. Further, the composite focal length "f12" of the first lens 11 and the second lens 12 and the composite focal length "f345" of the third lens 13, the fourth lens 14 and the fifth lens 15 satisfy the conditional expression (6) and, in addition, the polarity of the composite focal length "f12" of the first lens 11 and the second lens 12 is minus. Therefore, it is advantageous in the temperature characteristic.

[Second Embodiment]

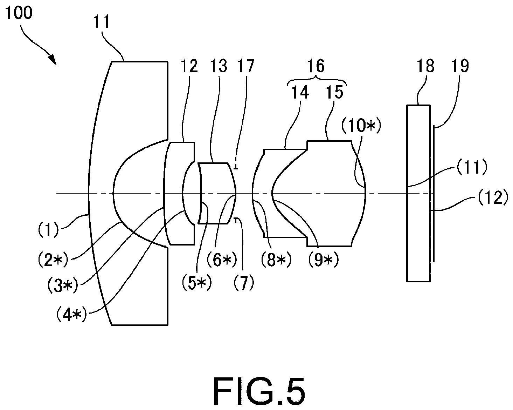

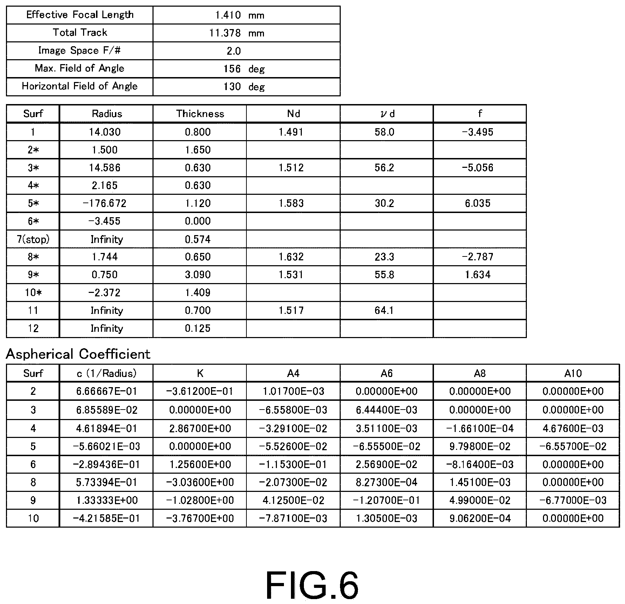

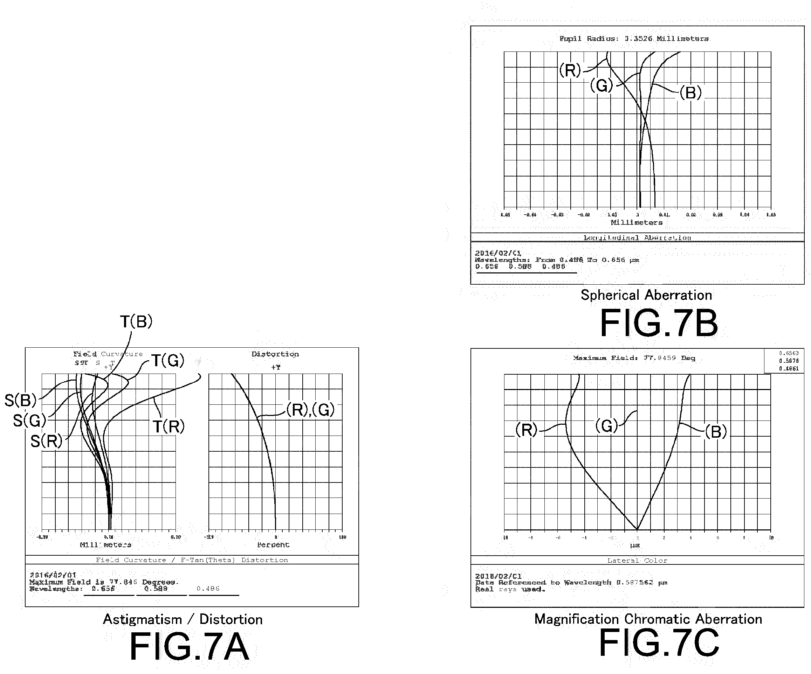

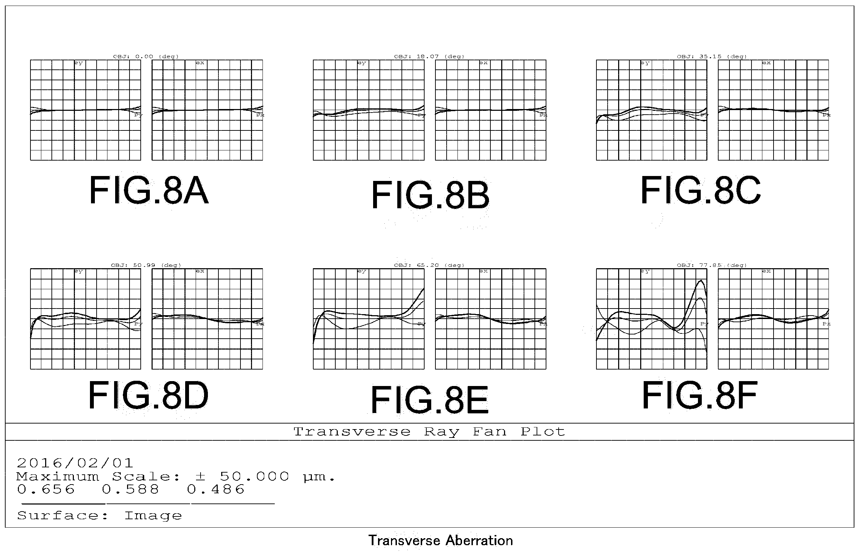

FIG. 5 is an explanatory view showing a wide angle lens 100 in accordance with a second embodiment of the present invention. FIG. 6 is an explanatory view showing respective lens data, aspherical coefficients and the like of the wide angle lens 100 shown in FIG. 5. FIGs. 7A, 7B and 7C are explanatory views showing aberrations of the wide angle lens 100 shown in FIG. 5. FIGs. 8A through 8F are explanatory views showing transverse aberrations of the wide angle lens 100 shown in FIG. 5. The basic constitution in this embodiment is similar to the first embodiment and thus the common portions are illustrated with the same reference signs and their detailed descriptions are omitted.

A horizontal viewing angle of the wide-angle lens 100 shown in FIG. 5 is, similarly to the first embodiment, 120° or more and, in the wide angle lens 100, a first lens 11, a second lens 12, a third lens 13, a diaphragm 17, a fourth lens 14 and a fifth lens 15 are disposed in this order from an object side to an image side. The first lens 11 is a negative meniscus lens with a convex surface facing the object side. In this embodiment, a surface on the object side (first surface 1) of the first lens 11 which is a convex surface is a spherical surface, and a surface on the image side (second surface 2) which is a concave surface is an aspherical surface.

The second lens 12 is a negative lens with a concave surface facing the image side. In this embodiment, the second lens 12 is a negative meniscus lens with a concave surface facing the image side, and at least one of a lens surface on the object side (third surface 3) which is a convex surface and a lens surface on the image side (fourth surface 4) which is a concave surface is an aspherical surface. In this embodiment, both of the lens surface on the object side (third surface 3) of the second lens 12 and the lens surface on the image side (fourth surface 4) are aspherical surfaces.

The third lens 13 is a positive meniscus lens with a convex surface facing the image side or a biconvex lens, and at least one of a lens surface on the object side (fifth surface 5) and a lens surface on the image side (sixth surface 6) is an aspherical surface. In this embodiment, the third lens 13 is a positive meniscus lens with a convex surface facing the image side, and both of the lens surface on the object side (fifth surface 5) which is a concave surface and the lens surface on the image side (sixth surface 6) which is a convex surface are aspherical surfaces.

The fourth lens 14 is a negative meniscus lens with a concave surface facing the image side or a biconcave lens. In this embodiment, the fourth lens 14 is a negative meniscus lens with a concave surface facing the image side, and both of a surface on the object side (eighth surface 8) of the fourth lens 14 which is a convex surface and a surface on the image side (ninth surface 9) which is a concave surface are aspherical surfaces.

The fifth lens 15 is a biconvex lens. The fourth lens 14 and the fifth lens 15 are plastic lenses and constitute a cemented lens 16 in which the lens surface on the image side of the fourth lens 14 and the lens surface on the object side of the fifth lens 15 are cemented each other. Both of a cemented surface (ninth surface 9) of the cemented lens 16 and a surface on the image side (tenth surface 10) of the fifth lens 15 which is a convex surface are aspherical surfaces. In this embodiment, the first lens 11, the second lens 12 and the third lens 13 are also plastic lenses similarly to the fourth lens 14 and the fifth lens 15.

In the wide angle lens 100 constituted as described above, the effective focal length "f0" of the entire optical system is 1.410mm, the object-image distance is 11.378mm, the "F"-value of the entire lens system is 2.0, the maximum viewing angle is 156deg, and the horizontal viewing angle is 130deg.

Further, as shown in FIG. 6 and Table 1, the wide angle lens 100 satisfies all of the above-mentioned conditional expressions (1), (2), (3), (4), (5) and (6). First, the refractive index "n4" of the fourth lens 14 is 1.632, which satisfies the conditional expression (1). A center radius of curvature "R45" of the cemented surface (ninth surface 9) of the cemented lens 16 is 0.750mm, and the effective focal length "f0" of the entire lens system is 1.410mm. Therefore, | R45/f0 | is 0.532 and thus the conditional expression (2) is satisfied. The Abbe number "v4" of the fourth lens 14 is 23.3 and satisfies the conditional expression (3).

The composite focal length "f45" of the fourth lens 14 and the fifth lens 15 is 3.057mm, and the effective focal length "f0" of the entire lens system is 1.410mm. Therefore, "f45/f0" is 2.168 and the conditional expression (4) is satisfied. The focal length "f4" of the fourth lens 14 is -2.787mm and the effective focal length "f0" of the entire lens system is 1.410mm. Therefore, "f4/f0" = -1.976 and thus the conditional expression (5) is satisfied. The composite focal length "f12" of the first lens 11 and the second lens 12 is -1.662mm, and the composite focal length "f345" of the third lens 13, the fourth lens 14 and the fifth lens 15 is 2.648mm. Therefore, "f12/f345" = -0.628, and thus the conditional expression (6) is satisfied.

The astigmatism / distortion (distortion aberration), the spherical aberration and the magnification chromatic aberration of the wide angle lens 100 constituted as described above are shown in FIGs. 7A through 7C, and the transverse aberrations are shown in FIGs. 8A through 8F. All the aberrations are small.

As described above, the wide angle lens 100 in this embodiment is constituted of five lenses in four groups and each of the five lenses is made of a plastic lens. Therefore, even when the horizontal viewing angle of the wide angle lens 100 is 120° or more, the wide angle lens 100 can be made small-sized and lightweight at a low cost. Further, eight surfaces of totaled nine surfaces are aspherical surfaces and thus, as shown in FIGs. 7A through 7C, the aberrations can be reduced with a small number of lenses.

Further, in the wide angle lens 100 in this embodiment, the radius of curvature "R45" of the cemented surface (ninth surface 9) of the cemented lens 16 and the effective focal length "f0" of the entire optical system satisfy the conditional expression (2) and thus the magnification chromatic aberration can be reduced. Further, a lower limit is set in the radius of curvature "R45" of the cemented surface (ninth surface 9) of the cemented lens 16 and thus the center radius of curvature of the lens surface on the image side of the fourth lens 14 which is a concave curved face and the center radius of curvature of the lens surface on the object side of the fifth lens 15 which is a convex curved face are large. Therefore, a manufacturing process and a cementing process of a lens single body can be stably performed and similar effects to the first embodiment can be attained.

[Third Embodiment]

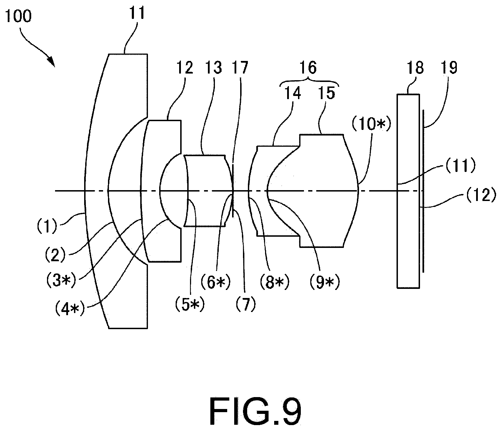

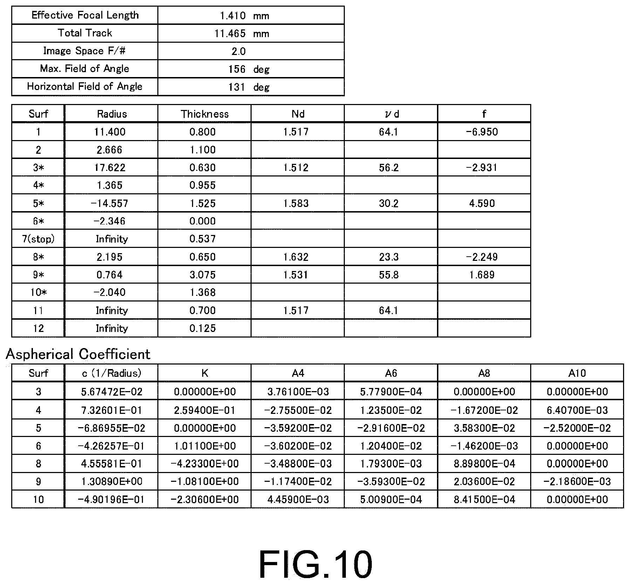

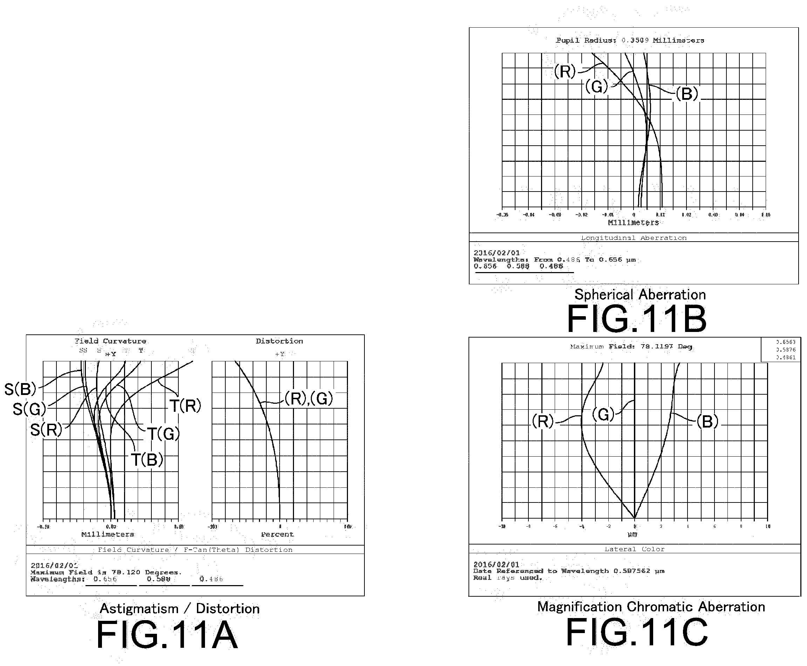

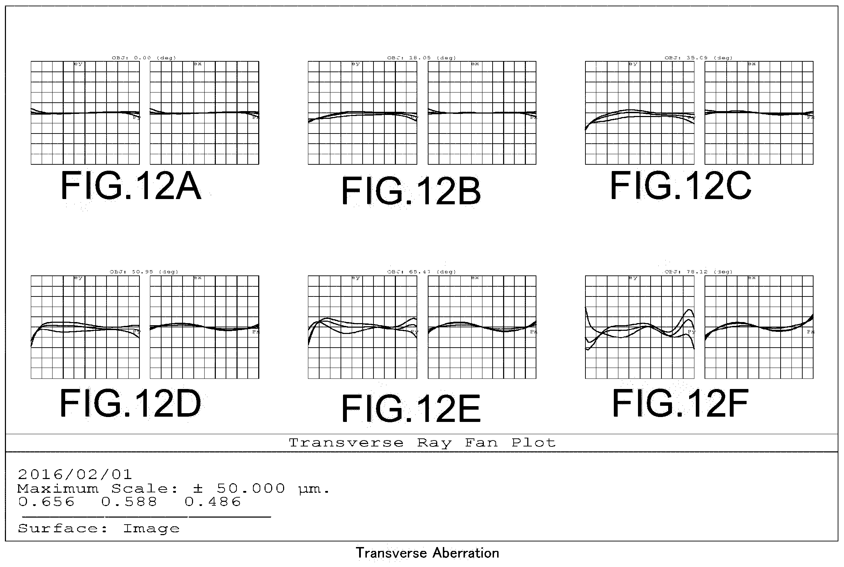

FIG. 9 is an explanatory view showing a wide angle lens 100 in accordance with a third embodiment of the present invention. FIG. 10 is an explanatory view showing respective lens data, aspherical coefficients and the like of the wide angle lens 100 shown in FIG. 9. FIGs. 11A, 11B and 11C are explanatory views showing aberrations of the wide angle lens 100 shown in FIG. 9. FIGs. 12A through 12F are explanatory views showing transverse aberrations of the wide angle lens 100 shown in FIG. 9. The basic constitution in this embodiment is similar to the first embodiment and thus the common portions are illustrated with the same reference signs and their detailed descriptions are omitted.

A horizontal viewing angle of a wide-angle lens 100 shown in FIG. 9 is, similarly to the first embodiment, 120° or more and, in the wide angle lens 100, a first lens 11, a second lens 12, a third lens 13, a diaphragm 17, a fourth lens 14 and a fifth lens 15 are disposed in this order from an object side to an image side. The first lens 11 is a negative meniscus lens with a convex surface facing the object side. In this embodiment, both of a surface on the object side (first surface 1) of the first lens 11 which is a convex surface and a surface on the image side (second surface 2) which is a concave surface are spherical surfaces.

The second lens 12 is a negative lens with a concave surface facing the image side. In this embodiment, the second lens 12 is a negative meniscus lens with a concave surface facing the image side, and at least one of a lens surface on the object side (third surface 3) which is a convex surface and a lens surface on the image side (fourth surface 4) which is a concave surface is an aspherical surface. In this embodiment, both of the lens surface on the object side (third surface 3) of the second lens 12 and the lens surface on the image side (fourth surface 4) are aspherical surfaces.

The third lens 13 is a positive meniscus lens with a convex surface facing the image side or a biconvex lens, and at least one of a lens surface on the object side (fifth surface 5) and a lens surface on the image side (sixth surface 6) is an aspherical surface. In this embodiment, the third lens 13 is a positive meniscus lens with a convex surface facing the image side, and both of the lens surface on the object side (fifth surface 5) which is a concave surface and the lens surface on the image side (sixth surface 6) which is a convex surface are aspherical surfaces.

The fourth lens 14 is a negative meniscus lens with a concave surface facing the image side or a biconcave lens. In this embodiment, the fourth lens 14 is a negative meniscus lens with a concave surface facing the image side, and both of a surface on the object side (eighth surface 8) of the fourth lens 14 which is a convex surface and a surface on the image side (ninth surface 9) which is a concave surface are aspherical surfaces.

The fifth lens 15 is a biconvex lens. The fourth lens 14 and the fifth lens 15 are plastic lenses and constitute a cemented lens 16 in which the lens surface on the image side of the fourth lens 14 and the lens surface on the object side of the fifth lens 15 are cemented each other. Both of a cemented surface (ninth surface 9) of the cemented lens 16 and a surface on the image side (tenth surface 10) of the fifth lens 15 which is a convex surface are aspherical surfaces.

In this embodiment, the first lens 11 is a glass lens and the second lens 12 and the third lens 13 are, similarly to the fourth lens 14 and the fifth lens 15, plastic lenses.

In the wide angle lens 100 constituted as described above, the effective focal length "f0" of the entire optical system is 1.410mm, the object-image distance is 11.465mm, the "F"-value of the entire lens system is 2.0, the maximum viewing angle is 156deg, and the horizontal viewing angle is 131deg.

Further, as shown in FIG. 10 and Table 1, the wide angle lens 100 satisfies all of the above-mentioned conditional expressions (1), (2), (3), (4), (5) and (6). First, the refractive index "n4" of the fourth lens 14 is 1.632, which satisfies the conditional expression (1). Further, the center radius of curvature "R45" of the cemented surface (ninth surface 9) of the cemented lens 16 is 0.764mm, and the effective focal length "f0" of the entire lens system is 1.410mm. Therefore,"| R45/f0 |" is 0.542 and thus the conditional expression (2) is satisfied. The Abbe number "v4" of the fourth lens 14 is 23.3 and satisfies the conditional expression (3).

The composite focal length "f45" of the fourth lens 14 and the fifth lens 15 is 3.205mm, and the effective focal length "f0" of the entire lens system is 1.410mm. Therefore, "f45/f0" is 2.272 and the conditional expression (4) is satisfied. The focal length "f4" of the fourth lens 14 is -2.249mm and the effective focal length "f0" of the entire lens system is 1.410mm. Therefore, "f4/f0" = -1.595 and thus the conditional expression (5) is satisfied. The composite focal length "f12" of the first lens 11 and the second lens 12 is -1.807mm and the composite focal length "f345" of the third lens 13, the fourth lens 14 and the fifth lens 15 is 2.671mm. Therefore, "f12/f345" = -0.676 and thus the conditional expression (6) is satisfied.

The astigmatism / distortion (distortion aberration), the spherical aberration and the magnification chromatic aberration of the wide angle lens 100 constituted as described above are shown in FIGs. 11A through 11C, and the transverse aberrations are shown in FIGs. 12A through 12F. All the aberrations are small.

As described above, the wide angle lens 100 in this embodiment is constituted of five lenses in four groups and four lenses are made of plastic lenses. Therefore, even when the horizontal viewing angle of the wide angle lens 100 is 120° or more, the wide angle lens 100 can be made small-sized and lightweight at a low cost. Further, seven surfaces of totaled nine surfaces are aspherical surfaces and thus, as shown in FIGs. 11A through 11C, the aberrations can be reduced with a small number of lenses.

Further, in the wide angle lens 100 in this embodiment, the radius of curvature "R45" of the cemented surface (ninth surface 9) of the cemented lens 16 and the effective focal length "f0" of the entire optical system satisfy the conditional expression (2) and thus the magnification chromatic aberration can be reduced. Further, a lower limit is set in the radius of curvature "R45" of the cemented surface (ninth surface 9) of the cemented lens 16 and thus the center radius of curvature of the lens surface on the image side of the fourth lens 14 which is a concave curved face and the center radius of curvature of the lens surface on the object side of the fifth lens 15 which is a convex curved face are large. Therefore, a manufacturing process and a cementing process of a lens single body can be stably performed and similar effects to the first embodiment can be attained.

[Fourth Embodiment]

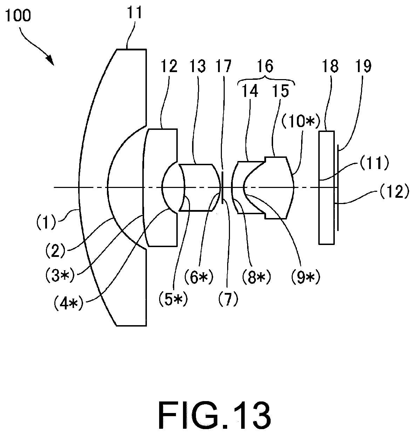

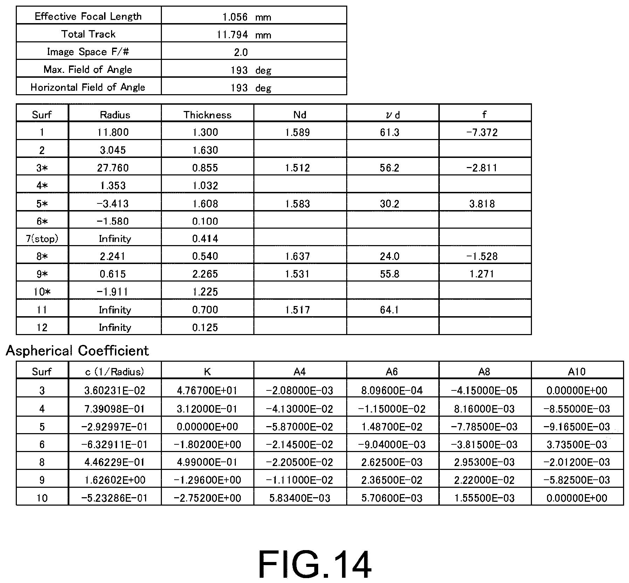

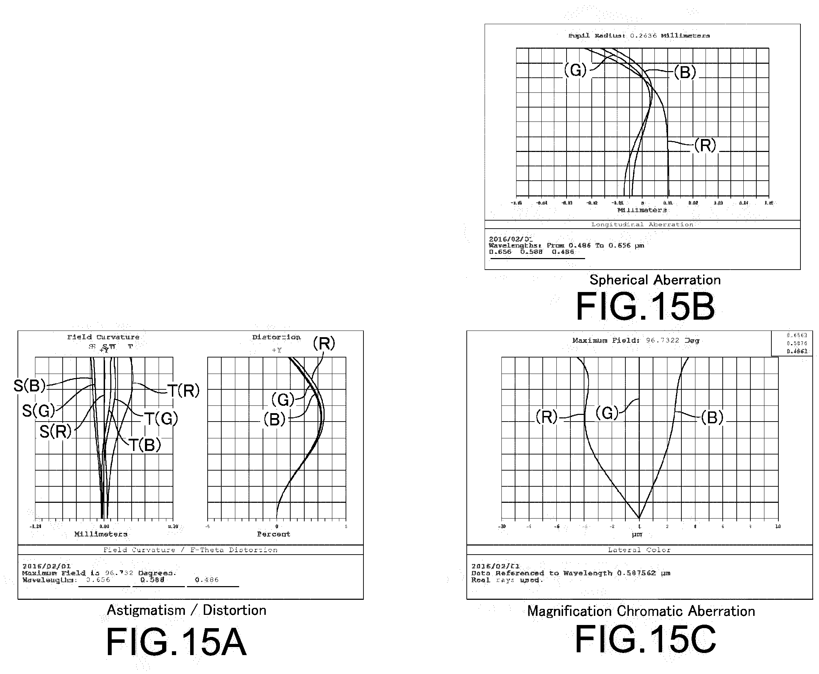

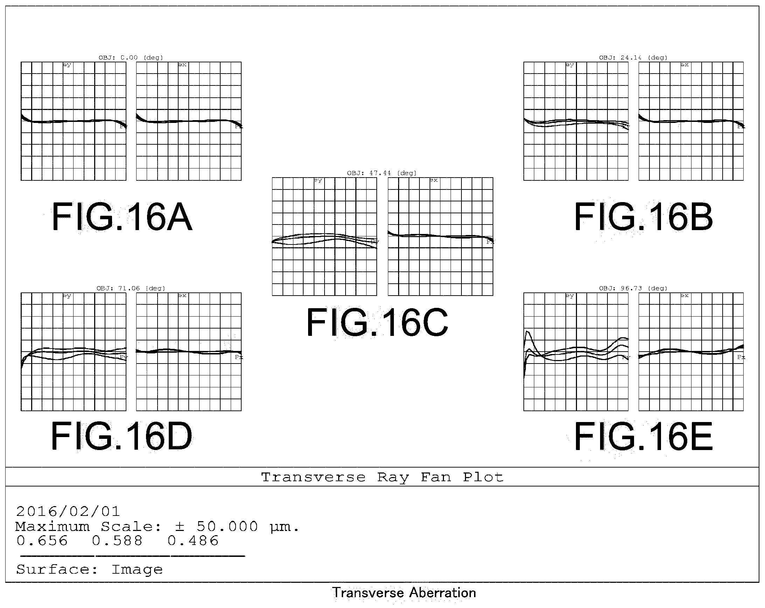

FIG. 13 is an explanatory view showing a wide angle lens 100 in accordance with a fourth embodiment of the present invention. FIG. 14 is an explanatory view showing respective lens data, aspherical coefficients and the like of the wide angle lens 100 shown in FIG. 13. FIGs. 15A, 15B and 15C are explanatory views showing aberrations of the wide angle lens 100 shown in FIG. 13. FIGs. 16A through 16E are explanatory views showing transverse aberrations of the wide angle lens 100 shown in FIG. 13. The basic constitution in this embodiment is similar to the first embodiment and thus the common portions are illustrated with the same reference signs and their detailed descriptions are omitted.

A horizontal viewing angle of a wide-angle lens 100 shown in FIG. 13 is, similarly to the first embodiment, 120° or more and, in the wide angle lens 100, a first lens 11, a second lens 12, a third lens 13, a diaphragm 17, a fourth lens 14 and a fifth lens 15 are disposed in this order from an object side to an image side. The first lens 11 is a negative meniscus lens with a convex surface facing the object side. In this embodiment, both of a surface on the object side (first surface 1) of the first lens 11 which is a convex surface and a surface on the image side (second surface 2) which is a concave surface are spherical surfaces.

The second lens 12 is a negative lens with a concave surface facing the image side. In this embodiment, the second lens 12 is a negative meniscus lens with a concave surface facing the image side, and at least one of a lens surface on the object side (third surface 3) which is a convex surface and a lens surface on the image side (fourth surface 4) which is a concave surface is an aspherical surface. In this embodiment, both of the lens surface on the object side (third surface 3) of the second lens 12 and the lens surface on the image side (fourth surface 4) are aspherical surfaces.

The third lens 13 is a positive meniscus lens with a convex surface facing the image side or a biconvex lens, and at least one of a lens surface on the object side (fifth surface 5) and a lens surface on the image side (sixth surface 6) is an aspherical surface. In this embodiment, the third lens 13 is a positive meniscus lens with a convex surface facing the image side, and both of the lens surface on the object side (fifth surface 5) which is a concave surface and the lens surface on the image side (sixth surface 6) which is a convex surface are aspherical surfaces.

The fourth lens 14 is a negative meniscus lens with a concave surface facing the image side or a biconcave lens. In this embodiment, the fourth lens 14 is a negative meniscus lens with a concave surface facing the image side, and both of a surface on the object side (eighth surface 8) of the fourth lens 14 which is a convex surface and a surface on the image side (ninth surface 9) which is a concave surface are aspherical surfaces.

The fifth lens 15 is a biconvex lens. The fourth lens 14 and the fifth lens 15 are plastic lenses and constitute a cemented lens 16 in which the lens surface on the image side of the fourth lens 14 and the lens surface on the object side of the fifth lens 15 are cemented each other. Both of a cemented surface (ninth surface 9) of the cemented lens 16 and a surface on the image side (tenth surface 10) of the fifth lens 15 which is a convex surface are aspherical surfaces. In this embodiment, the first lens 11 is a glass lens and the second lens 12 and the third lens 13 are, similarly to the fourth lens 14 and the fifth lens 15, plastic lenses.

In the wide angle lens 100 constituted as described above, the effective focal length "f0" of the entire optical system is 1.056mm, the object-image distance is 11.794mm, the "F"-value of the entire lens system is 2.0, the maximum viewing angle is 193deg, and the horizontal viewing angle is 193deg.

Further, as shown in FIG. 14 and Table 1, the wide angle lens 100 satisfies all of the above-mentioned conditional expressions (1), (2), (3), (4), (5) and (6). First, the refractive index "n4" of the fourth lens 14 is 1.637, which satisfies the conditional expression (1). Further, the center radius of curvature "R45" of the cemented surface (ninth surface 9) of the cemented lens 16 is 0.615mm and the effective focal length "f0" of the entire lens system is 1.056mm. Therefore,"| R45/f0 |" is 0.582 and thus the conditional expression (2) is satisfied. The Abbe number "v4" of the fourth lens 14 is 24.0 and satisfies the conditional expression (3).

The composite focal length "f45" of the fourth lens 14 and the fifth lens 15 is 3.055mm and the effective focal length "f0" of the entire lens system is 1.056mm. Therefore, "f45/f0" is 2.894 and the conditional expression (4) is satisfied. The focal length "f4" of the fourth lens 14 is -1.528mm and the effective focal length "f0" of the entire lens system is 1.056mm. Therefore, "f4/f0" = -1.447 and thus the conditional expression (5) is satisfied. The composite focal length "f12" of the first lens 11 and the second lens 12 is -1.711mm and the composite focal length "f345" of the third lens 13, the fourth lens 14 and the fifth lens 15 is 2.088mm. Therefore, "f12/f345" = -0.819 and thus the conditional expression (6) is satisfied.

The astigmatism / distortion (distortion aberration), the spherical aberration and the magnification chromatic aberration of the wide angle lens 100 constituted as described above are shown in FIGs. 15A through 15C, and the transverse aberrations are shown in FIGs. 16A through 16E. All the aberrations are small.

As described above, the wide angle lens 100 in this embodiment is constituted of five lenses in four groups and four lenses are made of plastic lenses. Therefore, even when the horizontal viewing angle of the wide angle lens 100 is 120° or more, the wide angle lens 100 can be made small-sized and lightweight at a low cost. Further, seven surfaces of totaled nine surfaces are aspherical surfaces and thus, as shown in FIGs. 15A through 15C, the aberrations can be reduced with a small number of lenses.

Further, in the wide angle lens 100 in this embodiment, the radius of curvature "R45" of the cemented surface (ninth surface 9) of the cemented lens 16 and the effective focal length "f0" of the entire optical system satisfy the conditional expression (2) and thus the magnification chromatic aberration can be reduced. Further, a lower limit is set in the radius of curvature "R45" of the cemented surface (ninth surface 9) of the cemented lens 16 and thus the center radius of curvature of the lens surface on the image side of the fourth lens 14 which is a concave curved face and the center radius of curvature of the lens surface on the object side of the fifth lens 15 which is a convex curved face are large. Therefore, similar effects to the first embodiment can be attained, for example, a manufacturing process and a cementing process of a lens single body can be stably performed.

[Fifth Embodiment]

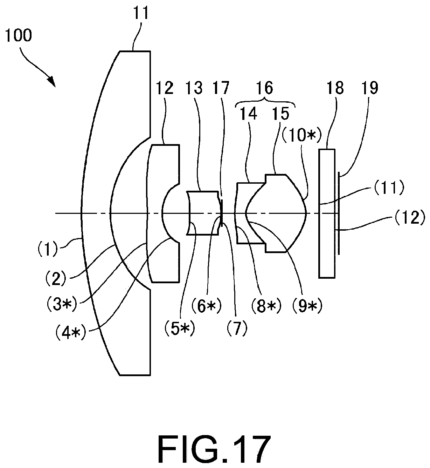

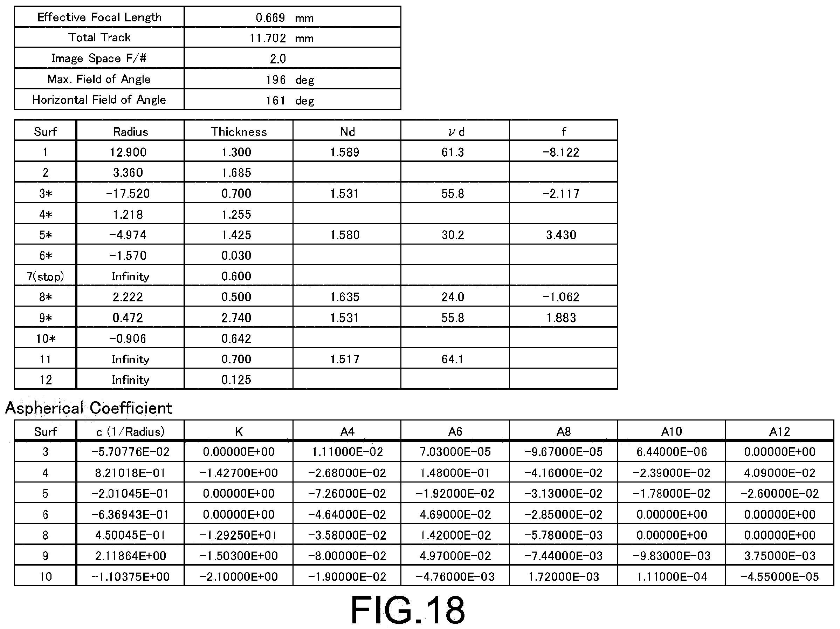

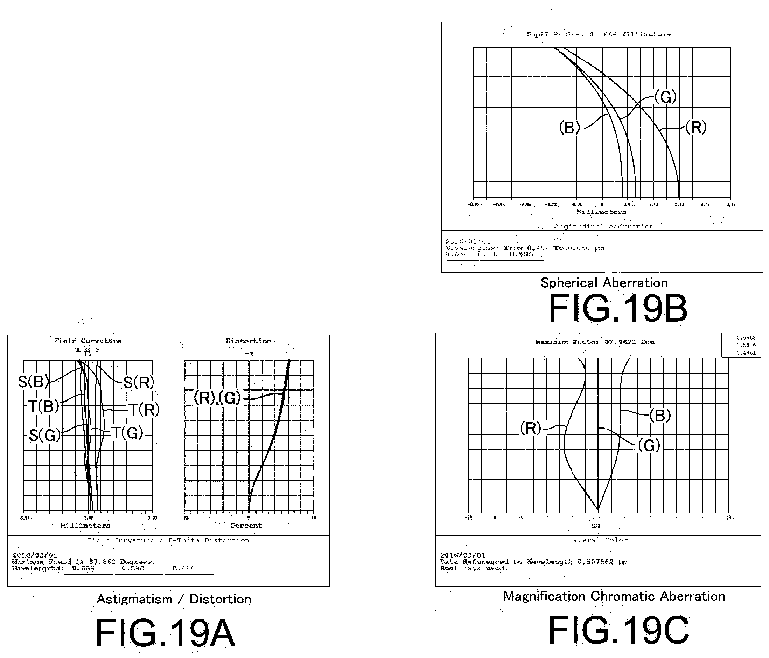

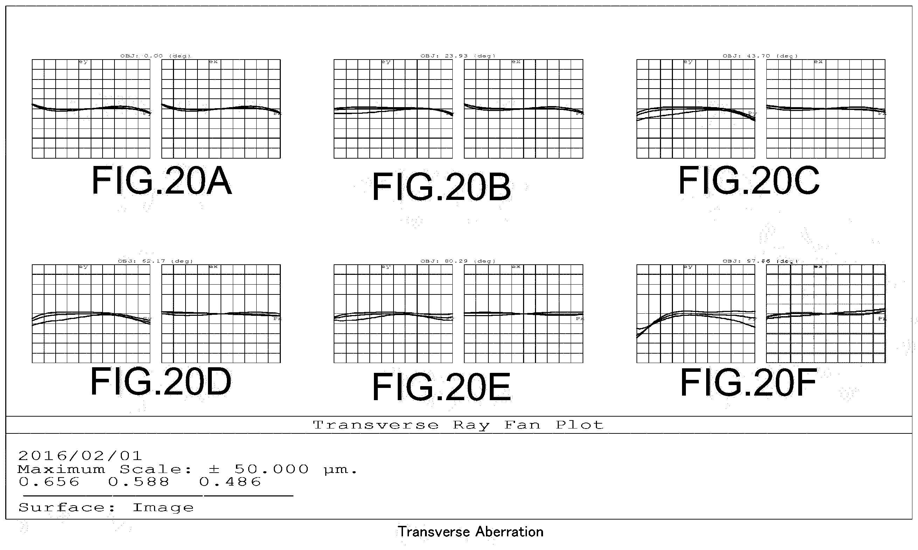

FIG. 17 is an explanatory view showing a wide angle lens 100 in accordance with a fifth embodiment of the present invention. FIG. 18 is an explanatory view showing respective lens data, aspherical coefficients and the like of the wide angle lens 100 shown in FIG. 17. FIGs. 19A, 19B and 19C are explanatory views showing aberrations of the wide angle lens 100 shown in FIG. 17. FIGs. 20A through 20F are explanatory views showing transverse aberrations of the wide angle lens 100 shown in FIG. 17. The basic constitution in this embodiment is similar to the first embodiment and thus the common portions are illustrated with the same reference signs and their detailed descriptions are omitted.

A horizontal viewing angle of a wide-angle lens 100 shown in FIG. 17 is, similarly to the first embodiment, 120° or more and, in the wide angle lens 100, a first lens 11, a second lens 12, a third lens 13, a diaphragm 17, a fourth lens 14 and a fifth lens 15 are disposed in this order from an object side to an image side. The first lens 11 is a negative meniscus lens with a convex surface facing the object side. In this embodiment, both of a surface on the object side (first surface 1) of the first lens 11 which is a convex surface and a surface on the image side (second surface 2) which is a concave surface are spherical surfaces.

The second lens 12 is a negative lens with a concave surface facing the image side. In this embodiment, the second lens 12 is a biconcave lens, and at least one of a lens surface on the object side (third surface 3) which is a concave surface and a lens surface on the image side (fourth surface 4) which is a concave surface is an aspherical surface. In this embodiment, both of the lens surface on the object side (third surface 3) of the second lens 12 and the lens surface on the image side (fourth surface 4) are aspherical surfaces.

The third lens 13 is a positive meniscus lens with a convex surface facing the image side or a biconvex lens, and at least one of a lens surface on the object side (fifth surface 5) and a lens surface on the image side (sixth surface 6) is an aspherical surface. In this embodiment, the third lens 13 is a positive meniscus lens with a convex surface facing the image side, and both of the lens surface on the object side (fifth surface 5) which is a concave surface and the lens surface on the image side (sixth surface 6) which is a convex surface are aspherical surfaces.

The fourth lens 14 is a negative meniscus lens with a concave surface facing the image side or a biconcave lens. In this embodiment, the fourth lens 14 is a negative meniscus lens with a concave surface facing the image side, and both of a surface on the object side (eighth surface 8) of the fourth lens 14 which is a convex surface and a surface on the image side (ninth surface 9) which is a concave surface are aspherical surfaces.

The fifth lens 15 is a biconvex lens. The fourth lens 14 and the fifth lens 15 are plastic lenses and constitute a cemented lens 16 in which the lens surface on the image side of the fourth lens 14 and the lens surface on the object side of the fifth lens 15 are cemented each other. Both of a cemented surface (ninth surface 9) of the cemented lens 16 and a surface on the image side (tenth surface 10) of the fifth lens 15 which is a convex surface are aspherical surfaces.

In this embodiment, the first lens 11 is a glass lens and the second lens 12 and the third lens 13 are, similarly to the fourth lens 14 and the fifth lens 15, plastic lenses. In the wide angle lens 100 constituted as described above, the effective focal length "f0" of the entire optical system is 0.669mm, the object-image distance is 11.702mm, the "F"-value of the entire lens system is 2.0, the maximum viewing angle is 196deg, and the horizontal viewing angle is 161deg.

Further, as shown in FIG. 18 and Table 1, the wide angle lens 100 satisfies all of the above-mentioned conditional expressions (1), (2), (3), (4), (5) and (6). First, the refractive index "n4" of the fourth lens 14 is 1.637, which satisfies the conditional expression (1). Further, the center radius of curvature "R45" of the cemented surface (ninth surface 9) of the cemented lens 16 is 0.472mm and the effective focal length "f0" of the entire lens system is 0.669mm. Therefore, "| R45/f0 |" is 0.705 and thus the conditional expression (2) is satisfied. The Abbe number "v4" of the fourth lens 14 is 24.0 and satisfies the conditional expression (3).

The composite focal length "f45" of the fourth lens 14 and the fifth lens 15 is 1.884mm and the effective focal length "f0" of the entire lens system is 0.669mm. Therefore, "f45/f0" is 2.815 and the conditional expression (4) is satisfied. The focal length "f4" of the fourth lens 14 is -1.062mm and the effective focal length "f0" of the entire lens system is 0.669mm. Therefore, "f4/f0" = -1.587 and thus the conditional expression (5) is satisfied. The composite focal length "f12" of the first lens 11 and the second lens 12 is -1.428mm and the composite focal length "f345" of the third lens 13, the fourth lens 14 and the fifth lens 15 is 2.372mm. Therefore, "f12/f345" = -0.602 and thus the conditional expression (6) is satisfied.

The astigmatism / distortion (distortion aberration), the spherical aberration and the magnification chromatic aberration of the wide angle lens 100 constituted as described above are shown in FIGs. 19A through 19C, and the transverse aberrations are shown in FIGs. 20A through 20F. All the aberrations are small.

As described above, the wide angle lens 100 in this embodiment is constituted of five lenses in four groups and four lenses are made of plastic lenses. Therefore, even when a horizontal viewing angle of the wide angle lens 100 is 120° or more, the wide angle lens 100 can be made small-sized and lightweight at a low cost. Further, seven surfaces of totaled nine surfaces are aspherical surfaces and thus, as shown in FIGs. 19A through 19C, the aberrations can be reduced with a small number of lenses.

Further, in the wide angle lens 100 in this embodiment, the radius of curvature "R45" of the cemented surface (ninth surface 9) of the cemented lens 16 and the effective focal length "f0" of the entire optical system satisfy the conditional expression (2) and thus the magnification chromatic aberration can be reduced. Further, a lower limit is set in the radius of curvature "R45" of the cemented surface (ninth surface 9) of the cemented lens 16 and thus the center radius of curvature of the lens surface on the image side of the fourth lens 14 which is a concave curved face and the center radius of curvature of the lens surface on the object side of the fifth lens 15 which is a convex curved face are large. Therefore, similar effects to the first embodiment can be attained, for example, a manufacturing process and a cementing process of a lens single body can be stably performed.

While the description above refers to particular embodiments of the present invention, it will be understood that many modifications may be made without departing from the scope of the appended set of claims.

The presently disclosed embodiments are therefore to be considered in all respects as illustrative and not restrictive, the scope of the invention being indicated by the appended claims, rather than the foregoing description.

**Claims**

1. A wide angle lens (100), consisting of:

   a first lens (11), a second lens (12), a third lens (13), a diaphragm (17), a fourth lens (14), a fifth lens (15) which are arranged in order from an object side to an image side, wherein
   the first lens (11) is a negative meniscus lens with a convex surface facing the object side and a concave surface facing the image side;
   the second lens (12) is a negative lens with a concave surface facing the image side and at least one of a lens surface on the object side and a lens surface on the image side is an aspherical surface;
   the third lens (13) is a positive meniscus lens with a concave surface facing the object side and a convex surface facing the image side and at least one of a lens surface on the object side and a lens surface on the image side is an aspherical surface;
   the fourth lens (14) is a negative meniscus lens with a concave surface facing the image side or a biconcave lens;
   the fifth lens (15) is a biconvex lens;
   the fourth lens (14) and the fifth lens (15) are plastic lenses which constitute a cemented lens (16) in which a lens surface on the image side of the fourth lens (14) and a lens surface on the object side of the fifth lens (15) are cemented;
   when a refractive index of the fourth lens (14) is "n4", the following condition is satisfied:

   $$n4 \geq 1.632,$$

   when a center radius of curvature of a cemented surface of the cemented lens (16) is "R45" and an effective focal length of an entire lens system is "f0", the following condition is satisfied:

   $$0.5 < |\,R45/f0\,| < 0.8,$$

   and
   when an Abbe number of the fourth lens (14) is "v4", the following condition is satisfied:

   $$v4 \leq 24.0.$$

2. The wide angle lens (100) according to claim 1, wherein
   when a composite focal length of the fourth lens (14) and the fifth lens (15) is "f45", the following condition is satisfied:

   $$f45/f0 < 3.$$

3. The wide angle lens (100) according to claim 1 or 2, wherein
   when a focal length of the fourth lens (14) is "f4", the following condition is satisfied:

   $$-2 < f4/f0 < 0.$$

4. The wide angle lens (100) according to one of claims 1 through 3, wherein
   when a composite focal length of the first lens (11) and the second lens (12) is "f12" and a composite focal length of the third lens (13), the fourth lens (14) and the fifth lens (15) is "f345", the following condition is satisfied:

   $$-1 < f12/f345 < 0.$$

5. The wide angle lens (100) according to one of claims 1 through 4, wherein a horizontal viewing angle of the wide angle lens (100) is 120 degrees or more.

**Patentansprüche**

1. Weitwinkellinse (100), bestehend aus:

   einer ersten Linse (11), einer zweiten Linse (12), einer dritten Linse (13), einer Blende (17), einer vierten Linse (14), einer fünften Linse (15), die in der Reihenfolge von einer Objektseite zu einer Bildseite angeordnet sind, wobei
   die erste Linse (11) eine negative Meniskuslinse mit einer konvexen Oberfläche, die der Objektseite zugewandt ist, und einer konkaven Oberfläche, die der Bildseite zugewandt ist, ist;
   die zweite Linse (12) eine Negativlinse mit einer konkaven Oberfläche ist, die der Bildseite zugewandt ist, und mindestens eines von einer Linsenoberfläche auf der Objektseite und einer Linsenoberfläche auf der Bildseite eine asphärische Oberfläche ist;
   die dritte Linse (13) eine positive Meniskuslinse mit einer konkaven Oberfläche, die der Objektseite zugewandt ist, und einer konvexen Oberfläche ist, die der Bildseite zugewandt ist, und mindestens eines von einer Linsenoberfläche auf der Objektseite und einer Linsenoberfläche auf der Bildseite eine asphärische Oberfläche ist;
   die vierte Linse (14) eine negative Meniskuslinse mit einer konkaven Oberfläche ist, die der Bildseite zugewandt ist, oder eine bikonkave Linse;
   die fünfte Linse (15) eine bikonvexe Linse ist;
   die vierte Linse (14) und die fünfte Linse (15) Kunststofflinsen sind, die eine verkittete Linse (16) bilden, bei der eine Linsenoberfläche auf der Bildseite der vierten Linse (14) und eine Linsenoberfläche auf der Objektseite der fünften Linse (15) verkittet sind;
   wenn ein Brechungsindex der vierten Linse (14) "n4" ist, die folgende Bedingung erfüllt ist:

   $$n4 \geq 1{,}632,$$

   wenn ein mittlerer Krümmungsradius einer verkitteten Oberfläche der verkitteten Linse (16) "R45" ist und eine effektive Brennweite eines gesamten Linsensystems "f0" ist, die folgende Bedingung erfüllt ist:

   $$0{,}5 < |\,R45/f0\,| < 0{,}8,$$

   und
   wenn eine Abbe-Zahl der vierten Linse (14) "v4" ist, die folgende Bedingung erfüllt ist:

   $$v4 \leq 24{,}0.$$

2. Weitwinkellinse (100) gemäß Anspruch 1, wobei
   wenn eine zusammengesetzte Brennweite der vierten Linse (14) und der fünften Linse (15) "f45" ist, die folgende Bedingung erfüllt ist:

   $$f45/f0 < 3.$$

3. Weitwinkellinse (100) gemäß Anspruch 1 oder 2, wobei
   wenn eine Brennweite der vierten Linse (14) "f4" ist, die folgende Bedingung erfüllt ist:

   $$-2 < f4/f0 < 0.$$

4. Weitwinkellinse (100) gemäß irgendeinem der Ansprüche 1 bis 3, wobei
   wenn eine zusammengesetzte Brennweite der ersten Linse (11) und der zweiten Linse (12) "f12" ist und eine zusammengesetzte Brennweite der dritten Linse (13), der vierten Linse (14) und der fünften Linse (15) "f345" ist, die folgende Bedingung erfüllt ist:

   $$-1 < f12/f345 < 0.$$

**5.** Weitwinkellinse (100) gemäß irgendeinem der Ansprüche 1 bis 4, wobei
ein horizontaler Betrachtungswinkel der Weitwinkellinse (100) 120 Grad oder mehr beträgt.

**Revendications**

**1.** Un objectif grand angle (100), constitué par :

une première lentille (11), une deuxième lentille (12), une troisième lentille (13), un diaphragme (17), une quatrième lentille (14), une cinquième lentille (15) qui sont disposés dans cet ordre à partir d'un côté objet vers un côté image, dans lequel
la première lentille (11) est une lentille ménisque négative ayant une surface convexe tournée vers le côté objet et une surface concave tournée vers le côté image ;
la deuxième lentille (12) est une lentille négative avec une surface concave tournée vers le côté image, et au moins une parmi une surface de lentille sur le côté objet et/ou une surface de lentille sur le côté image est une surface asphérique ;
la troisième lentille (13) est une lentille à ménisque positif avec une surface concave tournée vers le côté objet et une surface convexe tournée vers le côté image, et au moins une parmi une surface de lentille sur le côté objet et une surface de lentille sur le côté image est surface une asphérique ;
la quatrième lentille (14) est une lentille à ménisque négatif avec une surface concave tournée vers le côté image ou une lentille biconcave ;
la cinquième lentille (15) est une lentille biconvexe ;
la quatrième lentille (14) et la cinquième lentille (15) sont des lentilles en plastique qui constituent une lentille collée (16) dans laquelle une surface de lentille du côté image de la quatrième lentille (14) et une surface de lentille du côté objet de la une cinquième lentille (15) sont collée ;
lorsqu'un indice de réfraction de la quatrième lentille (14) est "n4", la condition suivante est satisfaite :

$$n4 \geq 1{,}632,$$

lorsqu'un rayon de courbure central d'une surface collée de la lentille collée (16) est "R45" et qu'une distance focale effective d'un système de lentille entier est "f0", la condition suivante est satisfaite :

$$0{,}5 < |\, R45/f0 \,| < 0{,}8,$$

et
lorsqu'un nombre d'Abbe de la quatrième lentille (14) est "v4", la condition suivante est satisfaite :

$$v4 \leq 24{,}0.$$

**2.** L'objectif grand angle (100) selon la revendication 1, dans lequel
lorsqu'une distance focale composite de la quatrième lentille (14) et de la cinquième lentille (15) est "f45", la condition suivante est satisfaite :

$$f45/f0 < 3.$$

**3.** L'objectif grand angle (100) selon la revendication 1 ou la revendication 2, dans lequel
lorsqu'une distance focale de la quatrième lentille (14) est "f4", la condition suivante est satisfaite :

$$-2 < f4/f0 < 0.$$

**4.** L'objectif grand angle (100) selon l'une des revendications 1 à 3, dans lequel
lorsqu'une distance focale composite de la première lentille (11) et de la deuxième lentille (12) est "f12" et qu'une distance focale composite de la troisième lentille (13), la quatrième lentille (14) et la cinquième lentille (15) est "f345", la condition suivante est satisfaite :

$$-1 < f12/f345 < 0$$

5. L'objectif grand angle (100) selon l'une des revendications 1 à 4, dans lequel un angle de vision horizontal de l'objectif grand angle (100) est de 120 degrés ou plus.

FIG.1

| Effective Focal Length | 0.822 mm | |
|---|---|---|
| Total Track | 9.206 mm | |
| Image Space F/# | 2.4 | |
| Max. Field of Angle | 192 deg | |
| Horizontal Field of Angle | 192 deg | |

| Surf | Radius | Thickness | Nd | ν d | f |
|---|---|---|---|---|---|
| 1 | 11.100 | 0.800 | 1.491 | 58.0 | −3.082 |
| 2* | 1.300 | 1.500 | | | |
| 3* | 29.500 | 0.600 | 1.512 | 56.2 | −1.996 |
| 4* | 0.980 | 0.580 | | | |
| 5* | 5.200 | 1.040 | 1.583 | 30.2 | 2.453 |
| 6* | −1.825 | 0.000 | | | |
| 7(stop) | Infinity | 0.326 | | | |
| 8* | 1.700 | 0.600 | 1.632 | 23.3 | −1.454 |
| 9* | 0.515 | 2.250 | 1.531 | 55.8 | 1.217 |
| 10* | −1.308 | 0.685 | | | |
| 11 | Infinity | 0.700 | 1.517 | 64.1 | |
| 12 | Infinity | 0.125 | | | |

Aspherical Coefficient

| Surf | c (1/Radius) | K | A4 | A6 | A8 | A10 |
|---|---|---|---|---|---|---|
| 2 | 7.69231E−01 | −3.78000E−01 | −1.68000E−02 | 1.44500E−02 | 0.00000E+00 | 0.00000E+00 |
| 3 | 3.38983E−02 | 0.00000E+00 | 1.74300E−02 | −4.11800E−03 | 0.00000E+00 | 0.00000E+00 |
| 4 | 1.02041E+00 | 3.68000E−01 | −6.66400E−02 | 1.99500E−01 | −3.05700E−03 | 1.23000E−01 |
| 5 | 1.92308E−01 | 0.00000E+00 | −9.26200E−02 | 2.16600E−01 | −3.55400E−01 | 0.00000E+00 |
| 6 | −5.47945E−01 | 2.95700E+00 | −1.25400E−01 | 1.57300E−01 | −3.95400E−02 | 0.00000E+00 |
| 8 | 5.88235E−01 | −6.01700E+00 | −4.35700E−02 | −5.76400E−02 | 9.11700E−02 | 0.00000E+00 |
| 9 | 1.94175E+00 | −1.03800E+00 | −8.78900E−02 | −3.32100E−01 | 3.55200E−01 | −1.03500E−01 |
| 10 | −7.64526E−01 | −4.48500E+00 | −8.85300E−02 | 4.11400E−02 | −6.59300E−04 | 0.00000E+00 |

# FIG.2

Spherical Aberration
FIG.3B

Magnification Chromatic Aberration
FIG.3C

Astigmatism / Distortion
FIG.3A

FIG.4A

FIG.4B

FIG.4C

FIG.4D

FIG.4E

Transverse Ray Fan Plot

Lens has no title.
2016/02/01
Maximum Scale: ± 50.000 μm.
0.656   0.588   0.486

Surface: Image

Transverse Aberration

FIG.5

| Effective Focal Length | 1.410 mm |
| Total Track | 11.378 mm |
| Image Space F/# | 2.0 |
| Max. Field of Angle | 156 deg |
| Horizontal Field of Angle | 130 deg |

| Surf | Radius | Thickness | Nd | ν d | f |
|------|--------|-----------|------|------|--------|
| 1 | 14.030 | 0.800 | 1.491 | 58.0 | −3.495 |
| 2* | 1.500 | 1.650 | | | |
| 3* | 14.586 | 0.630 | 1.512 | 56.2 | −5.056 |
| 4* | 2.165 | 0.630 | | | |
| 5* | −176.672 | 1.120 | 1.583 | 30.2 | 6.035 |
| 6* | −3.455 | 0.000 | | | |
| 7(stop) | Infinity | 0.574 | | | |
| 8* | 1.744 | 0.650 | 1.632 | 23.3 | −2.787 |
| 9* | 0.750 | 3.090 | 1.531 | 55.8 | 1.634 |
| 10* | −2.372 | 1.409 | | | |
| 11 | Infinity | 0.700 | 1.517 | 64.1 | |
| 12 | Infinity | 0.125 | | | |

Aspherical Coefficient

| Surf | c (1/Radius) | K | A4 | A6 | A8 | A10 |
|------|-------------|-----|-----|-----|-----|-----|
| 2 | 6.66667E−01 | −3.61200E−01 | 1.01700E−03 | 0.00000E+00 | 0.00000E+00 | 0.00000E+00 |
| 3 | 6.85589E−02 | 0.00000E+00 | −6.55800E−03 | 6.44400E−03 | 0.00000E+00 | 0.00000E+00 |
| 4 | 4.61894E−01 | 2.86700E+00 | −3.29100E−02 | 3.51100E−03 | −1.66100E−04 | 4.67600E−03 |
| 5 | −5.66021E−03 | 0.00000E+00 | −5.52600E−02 | −6.55500E−02 | 9.79800E−02 | −6.55700E−02 |
| 6 | −2.89436E−01 | 1.25600E+00 | −1.15300E−01 | 2.56900E−02 | −8.16400E−03 | 0.00000E+00 |
| 8 | 5.73394E−01 | −3.03600E+00 | −2.07300E−02 | 8.27300E−04 | 1.45100E−03 | 0.00000E+00 |
| 9 | 1.33333E+00 | −1.02800E+00 | 4.12500E−02 | −1.20700E−01 | 4.99000E−02 | −6.77000E−03 |
| 10 | −4.21585E−01 | −3.76700E+00 | −7.87100E−03 | 1.30500E−03 | 9.06200E−04 | 0.00000E+00 |

# FIG.6

Spherical Aberration
FIG.7B

Magnification Chromatic Aberration
FIG.7C

Astigmatism / Distortion
FIG.7A

FIG.9

| | | |
|---|---|---|
| Effective Focal Length | 1.410 | mm |
| Total Track | 11.465 | mm |
| Image Space F/# | 2.0 | |
| Max. Field of Angle | 156 | deg |
| Horizontal Field of Angle | 131 | deg |

| Surf | Radius | Thickness | Nd | $\nu$ d | f |
|---|---|---|---|---|---|
| 1 | 11.400 | 0.800 | 1.517 | 64.1 | −6.950 |
| 2 | 2.666 | 1.100 | | | |
| 3* | 17.622 | 0.630 | 1.512 | 56.2 | −2.931 |
| 4* | 1.365 | 0.955 | | | |
| 5* | −14.557 | 1.525 | 1.583 | 30.2 | 4.590 |
| 6* | −2.346 | 0.000 | | | |
| 7(stop) | Infinity | 0.537 | | | |
| 8* | 2.195 | 0.650 | 1.632 | 23.3 | −2.249 |
| 9* | 0.764 | 3.075 | 1.531 | 55.8 | 1.689 |
| 10* | −2.040 | 1.368 | | | |
| 11 | Infinity | 0.700 | 1.517 | 64.1 | |
| 12 | Infinity | 0.125 | | | |

Aspherical Coefficient

| Surf | c (1/Radius) | K | A4 | A6 | A8 | A10 |
|---|---|---|---|---|---|---|
| 3 | 5.67472E−02 | 0.00000E+00 | 3.76100E−03 | 5.77900E−04 | 0.00000E+00 | 0.00000E+00 |
| 4 | 7.32601E−01 | 2.59400E−01 | −2.75500E−02 | 1.23500E−02 | −1.67200E−02 | 6.40700E−03 |
| 5 | −6.86955E−02 | 0.00000E+00 | −3.59200E−02 | −2.91600E−02 | 3.58300E−02 | −2.52000E−02 |
| 6 | −4.26257E−01 | 1.01100E+00 | −3.60200E−02 | 1.20400E−02 | −1.46200E−03 | 0.00000E+00 |
| 8 | 4.55581E−01 | −4.23300E+00 | −3.48800E−03 | 1.79300E−03 | 8.89800E−04 | 0.00000E+00 |
| 9 | 1.30890E+00 | −1.08100E+00 | −1.17400E−02 | −3.59300E−02 | 2.03600E−02 | −2.18600E−03 |
| 10 | −4.90196E−01 | −2.30600E+00 | 4.45900E−03 | 5.00900E−04 | 8.41500E−04 | 0.00000E+00 |

# FIG.10

Spherical Aberration
# FIG.11B

Astigmatism / Distortion
# FIG.11A

Magnification Chromatic Aberration
# FIG.11C

FIG.12A  FIG.12B  FIG.12C

FIG.12D  FIG.12E  FIG.12F

Transverse Ray Fan Plot

2016/02/01
Maximum Scale: ± 50.000 μm.
0.656   0.588   0.486

Surface: Image

Transverse Aberration

**FIG.13**

| Effective Focal Length | 1.056 mm |
|---|---|
| Total Track | 11.794 mm |
| Image Space F/# | 2.0 |
| Max. Field of Angle | 193 deg |
| Horizontal Field of Angle | 193 deg |

| Surf | Radius | Thickness | Nd | $\nu$ d | f |
|---|---|---|---|---|---|
| 1 | 11.800 | 1.300 | 1.589 | 61.3 | −7.372 |
| 2 | 3.045 | 1.630 | | | |
| 3* | 27.760 | 0.855 | 1.512 | 56.2 | −2.811 |
| 4* | 1.353 | 1.032 | | | |
| 5* | −3.413 | 1.608 | 1.583 | 30.2 | 3.818 |
| 6* | −1.580 | 0.100 | | | |
| 7(stop) | Infinity | 0.414 | | | |
| 8* | 2.241 | 0.540 | 1.637 | 24.0 | −1.528 |
| 9* | 0.615 | 2.265 | 1.531 | 55.8 | 1.271 |
| 10* | −1.911 | 1.225 | | | |
| 11 | Infinity | 0.700 | 1.517 | 64.1 | |
| 12 | Infinity | 0.125 | | | |

Aspherical Coefficient

| Surf | c (1/Radius) | K | A4 | A6 | A8 | A10 |
|---|---|---|---|---|---|---|
| 3 | 3.60231E−02 | 4.76700E+01 | −2.08000E−03 | 8.09600E−04 | −4.15000E−05 | 0.00000E+00 |
| 4 | 7.39098E−01 | 3.12000E−01 | −4.13000E−02 | −1.15000E−02 | 8.16000E−03 | −8.55000E−03 |
| 5 | −2.92997E−01 | 0.00000E+00 | −5.87000E−02 | 1.48700E−02 | −7.78500E−03 | −9.16500E−03 |
| 6 | −6.32911E−01 | −1.80200E+00 | −2.14500E−02 | −9.04000E−03 | −3.81500E−03 | 3.73500E−03 |
| 8 | 4.46229E−01 | 4.99000E−01 | −2.20500E−02 | 2.62500E−03 | 2.95300E−03 | −2.01200E−03 |
| 9 | 1.62602E+00 | −1.29600E+00 | −1.11000E−02 | 2.36500E−02 | 2.22000E−02 | −5.82500E−03 |
| 10 | −5.23286E−01 | −2.75200E+00 | 5.83400E−03 | 5.70600E−03 | 1.55500E−03 | 0.00000E+00 |

# FIG.14

Spherical Aberration

# FIG.15B

Astigmatism / Distortion

# FIG.15A

Magnification Chromatic Aberration

# FIG.15C

FIG.16A

FIG.16B

FIG.16C

FIG.16D

FIG.16E

Transverse Ray Fan Plot

2016/02/01
Maximum Scale: ± 50.000 µm.
0.656   0.588   0.486

Surface: Image

Transverse Aberration

FIG.17

| Effective Focal Length | 0.669 mm |
|---|---|
| Total Track | 11.702 mm |
| Image Space F/# | 2.0 |
| Max. Field of Angle | 196 deg |
| Horizontal Field of Angle | 161 deg |

| Surf | Radius | Thickness | Nd | $\nu$ d | f |
|---|---|---|---|---|---|
| 1 | 12.900 | 1.300 | 1.589 | 61.3 | −8.122 |
| 2 | 3.360 | 1.685 | | | |
| 3* | −17.520 | 0.700 | 1.531 | 55.8 | −2.117 |
| 4* | 1.218 | 1.255 | | | |
| 5* | −4.974 | 1.425 | 1.580 | 30.2 | 3.430 |
| 6* | −1.570 | 0.030 | | | |
| 7(stop) | Infinity | 0.600 | | | |
| 8* | 2.222 | 0.500 | 1.635 | 24.0 | −1.062 |
| 9* | 0.472 | 2.740 | 1.531 | 55.8 | 1.883 |
| 10* | −0.906 | 0.642 | | | |
| 11 | Infinity | 0.700 | 1.517 | 64.1 | |
| 12 | Infinity | 0.125 | | | |

Aspherical Coefficient

| Surf | c (1/Radius) | K | A4 | A6 | A8 | A10 | A12 |
|---|---|---|---|---|---|---|---|
| 3 | −5.70776E−02 | 0.00000E+00 | 1.11000E−02 | 7.03000E−05 | −9.67000E−05 | 6.44000E−06 | 0.00000E+00 |
| 4 | 8.21018E−01 | −1.42700E+00 | −2.68000E−02 | 1.48000E−01 | −4.16000E−02 | −2.39000E−02 | 4.09000E−02 |
| 5 | −2.01045E−01 | 0.00000E+00 | −7.26000E−02 | −1.92000E−02 | −3.13000E−02 | −1.78000E−02 | −2.60000E−02 |
| 6 | −6.36943E−01 | 0.00000E+00 | −4.64000E−02 | 4.69000E−02 | −2.85000E−02 | 0.00000E+00 | 0.00000E+00 |
| 8 | 4.50045E−01 | −1.29250E+01 | −3.58000E−02 | 1.42000E−02 | −5.78000E−03 | 0.00000E+00 | 0.00000E+00 |
| 9 | 2.11864E+00 | −1.50300E+00 | −8.00000E−02 | 4.97000E−02 | −7.44000E−03 | −9.83000E−03 | 3.75000E−03 |
| 10 | −1.10375E+00 | −2.10000E+00 | −1.90000E−02 | −4.76000E−03 | 1.72000E−03 | 1.11000E−04 | −4.55000E−05 |

# FIG.18

EP 3 226 053 B1

Spherical Aberration
FIG.19B

Magnification Chromatic Aberration
FIG.19C

Astigmatism / Distortion
FIG.19A

FIG.20A  FIG.20B  FIG.20C
FIG.20D  FIG.20E  FIG.20F

Transverse Ray Fan Plot

Transverse Aberration

2016/02/01
Maximum Scale: ± 50.000 μm.
0.656  0.588  0.486

Surface:  Image

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015045803 A
- WO 2015020006 A1
- US 2014347494 A1